# EUROPÄISCHE PATENTANMELDUNG

(11) **EP 2 601 861 A2**
(43) Veröffentlichungstag der Anmeldung: **12.06.2013**
(21) Anmeldenummer: 12191532.6
(22) Anmeldetag: 07.11.2012
(51) Int. Cl.: A47B 81/06

(54) **Videokonferenzmöbel**

(30) Priorität: 07.12.2011 DE 202011052219 U
(71) Anmelder: Digitech GmbH & Co. KG, 94265 Patersorf (DE)
(72) Erfinder: Reitmeier, Thomas, 94265 Petersdorf (DE)
(74) Vertreter: Graf Glück Kritzenberger

(57) **Zusammenfassung**

Die Erfindung betrifft ein Videokonferenzmöbel umfassend einen Gehäusekorpus (2), in dem zumindest eine Bildanzeigeeinrichtung (3), zumindest eine Bildaufnahmeeinrichtung (4) und zumindest eine Tonwiedergabeeinrichtung (5) vorgesehen sind. Die Erfindung zeichnet sich dadurch aus, dass zumindest die Bildanzeigeeinrichtung (3) und die Bildaufnahmeeinrichtung (4) im Gehäusekorpus (2) aufgenommen sind und dass wenigstens eine zur lösbaren Befestigung am Gehäusekorpus (2) ausgebildete erste Abdeckeinheit (6) vorgesehen ist, die die Bildanzeigeeinrichtung (3) und die Bildaufnahmeeinrichtung (4) vollständig überdeckt und zumindest abschnittsweise im Bereich der Bildanzeigeeinrichtung (3) und der Bildaufnahmeeinrichtung (4) transparent ausgebildet ist.

## Beschreibung

Die Erfindung betrifft ein Videokonferenzmöbel gemäß dem Oberbegriff des Patentanspruchs 1.

Videokonferenzvorrichtungen sind aus dem Stand der Technik bereits hinlänglich bekannt. Sie weisen zumindest eine Bildanzeigeeinrichtung, zumindest eine Bildaufnahmeeinrichtung, eine Tonaufnahmeeinrichtung und eine Tonwiedergabeeinrichtung auf. Durch derartige Videokonferenzeinrichtungen ist es möglich, dass Personen an unterschiedlichen Orten miteinander kommunizieren können, wobei über einen Telekommunikationskanal neben einer Sprechverbindung auch eine Bildverbindung zwischen den Konferenzteilnehmern erzeugt wird.

Insbesondere sind Videokonferenzeinrichtungen bekannt geworden, deren Bildanzeigeeinrichtung, Bildaufnahmeeinrichtung und Tonwiedergabeeinrichtung als getrennte Komponenten in eine raumteilende Wand integriert sind. Ein wesentlicher Nachteil derartiger Vorrichtungen besteht darin, dass ein Umzug der Videokonferenzeinrichtung in einen anderen Raum, bzw. an einen anderen Standort mit erheblichen Baumaßnahmen verbunden ist, da die einzelnen Komponenten der Videokonferenzeinrichtung zunächst der Wand entnommen werden müssen und in dem neu bereitgestellten Raum anschließend wieder in eine derartige Wand integriert werden müssen. Ferner hat sich gezeigt, dass insbesondere bei Personen, die selten an Videokonferenzen teilnehmen, Irritationen entstehen, wenn die unterschiedlichen zur Übertragung von Videokonferenzen benötigten Einrichtungen, d.h. insbesondere die Bildanzeigeeinrichtung und die Bildaufnahmeeinrichtung als separate Einheiten für den Betrachter optisch wahrnehmbar sind. Bei den Personen entsteht dann ein im Vergleich zur direkten, persönlichen Kommunikation unnatürliches Kommunikationsverhalten.

Ausgehend hiervon ist es Aufgabe der Erfindung, eine Videokonferenzvorrichtung anzugeben, die insbesondere dem ungeübten Videokonferenzteilnehmer eine der natürlichen, direkten Gesprächsumgebung möglichst nahekommenden Eindruck der Gesprächsführung vermittelt und darüber hinaus die Videokonferenzeinrichtung einfach und kostengünstig ohne erhebliche Umbaumaßnahmen in dem jeweiligen Konferenzraum platziert werden kann. Die Aufgabe wird ausgehend vom Oberbegriff des Patentanspruchs 1 durch dessen kennzeichnende Merkmale gelöst.

Der wesentliche Aspekt des erfindungsgemäßen Videokonferenzmöbels umfassend einen Gehäusekorpus, in dem zumindest eine Bildanzeigeeinrichtung, zumindest eine Bildaufnahmeeinrichtung und eine Tonwiedergabevorrichtung vorgesehen ist, besteht darin, dass zumindest die Bildanzeigeeinrichtung und die Bildaufnahmeeinrichtung im Gehäusekorpus aufgenommen sind und dass wenigstens eine zur lösbaren Befestigung am Gehäusekorpus ausgebildete erste Abdeckeinheit vorgesehen ist, die die Bildanzeigeeinrichtung und die Bildaufnahmeeinrichtung vollständig überdeckt und zumindest abschnittsweise im Bereich der Bildanzeigeeinrichtung und der Bildaufnahmeeinrichtung transparent ausgebildet ist. Durch die erfindungsgemäße Ausbildung des Videokonferenzmöbels wird eine verdeckte Unterbringung der Videokonferenztechnik in dem Gehäusekorpus ermöglicht, wobei durch die erste Abdeckeinheit sowohl die Bildanzeigeeinrichtung als auch die Bildaufnahmeeinrichtung vollständig überdeckt wird. Diese vollständige, vorderseitige Verdeckung der Videokonferenztechnik bietet den entscheidenden Vorteil, dass der Videokonferenzteilnehmer die einzelnen für die Videoübertragung notwendigen Technikkomponenten, insbesondere die Bildanzeigeeinrichtung und die Bildaufnahmeeinrichtung nicht getrennt wahrnimmt und damit nicht zur optischen Fixierung der einzelnen Technikkomponenten neigt. Des Weiteren kann das Videokonferenzmöbel durch die Integration zumindest der Bildanzeigeeinrichtung und der Bildaufnahmeeinrichtung in den Gehäusekorpus mit nur geringem Zeit und Kostenaufwand in den Konferenzraum integriert bzw. ebenfalls mit nur geringem Aufwand in einen anderen Konferenzraum umgesetzt werden.

In einem bevorzugten Ausführungsbeispiel sind die Bildanzeigeeinrichtung und die Bildaufnahmeeinrichtung vollständig in dem durch den Gehäusekorpus und die erste Abdeckeinheit begrenzten Raum aufgenommen. Dadurch wird erreicht, dass die Bildanzeigeeinrichtung und die Bildaufnahmeeinrichtung vollständig in den Innenraum des Videokonferenzmöbels integriert sind und für den Videokonferenzteilnehmer damit nach außen hin nicht oder im Wesentlichen nicht in Erscheinung treten.
Bevorzugt ist die erste Abdeckeinheit zumindest an der dem Gehäusekorpus abgewandten Vorderseite vollflächig aus einem transparenten Material, insbesondere aus Glas gebildet und/oder weist zumindest einen transparenten Bildanzeigebereich und einen transparenten Bildaufinahmebereich auf. Bei einer mehrschichtigen Ausbildung ist vorzugsweise zumindest die vordere Materialschicht vollflächig aus einem transparenten Material gebildet. Transparent im Sinne der Erfindung bedeutet hierbei, dass das Material eine hohe Lichtdurchlässigkeit im sichtbaren Wellenbereich elektromagnetsicher Strahlung aufweist. Durch die vollflächig Ausbildung der ersten Abdeckeinheit aus dem transparenten Material, insbesondere Glas erscheint die Abdeckeinheit als eine durchgängige Fläche, hinter der optisch kaschiert und damit für den Konfierenzteilnehmer nicht direkt wahrnehmbar die Bildanzeigeeinrichtung bzw. die Bildaufinahmeeinrichtung vorgesehen ist. Dadurch versucht insbesondere der ungeübte Videokonfierenzteilnehmer nicht ständig die im Videokonfierenzmöbel enthaltenen, einzelnen Technikkomponenten fixiert zu betrachten, sondern betrachtet lediglich die transparent ausgebildete Vorderseite der ersten Abdeckeinheit, was vorteilhafiterweise eine natürlichere Gesprächsumgebung erzeugt.

Besonders bevorzugt ist die zumindest eine Bildanzeigeeinrichtung unmittelbar hinter dem Bildanzeigebereich und die Bildaufinahmeeinrichtung unmittelbar hinter dem Bildaufinahmebereich angeordnet. Dadurch wird erreicht, dass der Videokonfierenzteilnehmer durch den transparenten Bildanzeigebereich hindurch die Darstellungen auf der Bildanzeigeeinrichtung wahrnehmen kann. Der Bildaufinahmeeinrichtung ist es durch den transparent ausgebildeten Bildaufinahmebereich der Abdeckeinheit hindurch möglich, den vor dem Videokonfierenzmöbel befindlichen Halbraum aufzunehmen bzw. Videosequenzen und/oder Bilder von diesem Raumbereich zu erzeugen.

In einem weiteren bevorzugten Ausführungsbeispiel weist die erste Abdeckeinheit zumindest einen intransparenten oder im Wesentlichen intransparenten Bereich auf. Unter Intransparenz im Rahmen der Erfindung wird die Materialeigenschaft verstanden, Licht, d.h. elektromagnetische Strahlung im sichtbaren Spektralbereich vollständig zu absorbieren oder zumindest derart stark zu absorbieren, dass das menschliche Auge die durch den intransparenten Bereich hindurchtretende Reststrahlung nicht mehr wahrnehmen kann. Durch die intransparenten Bereiche ist damit erreicht, dass vor dem Videokonfierenzmöbel befindliche Konfierenzteilnehmer bzw. Betrachter den Raum hinter dem intransparenten Bereich, insbesondere den Raum innerhalb des Gehäusekorpus nicht betrachten können bzw. dass im Gehäusekorpus durch die vorhandenen Technikkomponenten entstehendes Licht oder von außen in den Gehäusekorpus einfallendes Licht nicht von vorne durch die intransparenten Bereiche der ersten Abdeckeinheit hindurch sichtbar sind.

Besonders bevorzugt ist der intransparente oder im Wesentlichen intransparente Bereich randseitig vorgesehen, wobei vorzugsweise abgesehen von dem Bildanzeigebereich und dem Bildaufnahmebereich sämtliche übrigen Flächenabschnitte der Abdeckeinheit intransparent ausgebildet sind. Besonders bevorzugt ist eine rahmenförmige Ausbildung des intransparenten Bereichs. Dies ermöglichstdem Videokonferenzteilnehmer lediglich die Wahrnehmung der Darstellungen der Bildanzeigeeinrichtung und der Bildaufnahmeeinrichtung lediglich der Aufnahme von Bildern oder Videosequenzen in dem vor dem Videokonferenzmöbel befindlichen Halbraum. Ein Einblick in die Übrigen von der Abdeckschicht überdeckten Bereiche wird jedoch wirksam verhindert, sodass die hinter der Abdeckschicht vorhandene weitere Konferenztechnik, beispielsweise Lüfter, Verstärker und weitere für Videokonferenzübertragungen benötigte Technikkomponenten trotz vorderseitig vollflächig eine transparente Materialschicht aufweisender erster Abdeckeinheit optisch verdeckt im Gehäusekorpus aufgenommen sind.

In einem besonders bevorzugten Beispiel ist der intransparente oder im Wesentlichen intransparente Bereich durch eine intransparente Materialdeckschicht, insbesondere eine Lackschicht gebildet, die auf die transparente Materialschicht der ersten Abdeckeinheit auf der dem Gehäusekorpus zugewandten Rückseite aufgebracht ist. Bevorzugt ist eine schwarze oder anthrazitfarbene Lackschicht mit einem hohen Absorptionsverhalten. Abweichend hiervon kann ebenfalls eine laminatartige, intransparente Materialdeckschicht verwendet werden. Derartige Lackschichten oder Laminatschichten lassen sich einfach und kostengünstig auf die transparente Materialschicht aufbringen.

Besonders bevorzugt weist die erste Abdeckeinheit eine dem Gehäusekorpus abgewandte vorderseitige Entspiegelung auf. Bevorzugt ist diese Entspiegelung auf der Vorderseite der transparenten Materialschicht der ersten Abdeckeinheit aufgebracht. Damit weist die mehrschichtige erste Abdeckeinheit bevorzugt eine dem Gehäusekorpus zugewandte, partielle intransparente Materialdeckschicht, eine transparente Materialschicht, insbesondere Glas und eine dem Videokonferenzteilnehmer zugewandte, vorderseitige Entspiegelungsschicht auf. Durch diese Entspiegelungsschicht wird erreicht, dass störende Lichtreflektionen an der transparenten Materialschicht der ersten Abdeckeinheit vollständig oder zumindest nahezu vollständig eliminiert werden.

Weiterhin vorzugsweise ist zumindest eine zweite Abdeckeinheit aus einem nichttransparenten Material vorgesehen, wobei diese zweite Abdeckeinheit ebenfalls vorderseitig an dem Gehäusekorpus vorgesehen ist und ebenfalls vorzugsweise lösbar mit dem Gehäusekorpus verbunden ist. Durch diese zumindest eine zweite Abdeckeinheit wird bewirkt, dass bei Verwendung einer ersten Abdeckeinheit, die eine Höhe kleiner als die Höhe des Gehäusekorpus aufweist, die von der ersten Abdeckeinheit nicht überdeckten Bereiche durch die zweite Abdeckeinheit abgedeckt werden. Die zweiten Abdeckeinheiten bewirken zusammen mit der ersten Abdeckeinheit eine vollständige Überdeckdeckung des Gehäusekorpus und darin enthaltener Technikkomponenten.

Bevorzugt ist die Abdeckeinheit aus einem acrylgebundenen Mineralwerkstoff insbesondere aus Corian^{®} hergestellt. Dieser Verbundwerkstoff lässt sich mit herkömmlichen, spanabhebenden Holzbearbeitungsverfahren bearbeiten, insbesondere Fräsen, Schneiden oder Bohren und weist eine Oberflächenbeschaffenheit auf, die aufgrund der hohen Oberflächendichte eine leichte Reinigung ermöglicht. Bevorzugt ist zumindest ein Paar von zweiten Abdeckeinheiten vorgesehen, wobei jeweils eine zweite Abdeckeinheit oberhalb und unterhalb der ersten Abdeckeinheit vorgesehen ist. Dadurch kann erreicht werden, dass bei Anordnung der Bildanzeigeeinheit in Tischhöhe der von der ersten Abdeckeinheit oberseitig bzw. unterseitig nicht überdeckte Bereich des Gehäusekorpus durch die oberseitig bzw. unterseitig vorgesehenen, zweiten Abdeckeinheiten abgedeckt und darüber hinaus eine symmetrische, optisch ansprechende Platzierung der ersten Abdeckeinheit in der Mitte zwischen den zweiten Abdeckeinheiten erreicht wird.

Besonders bevorzugt bildet die zumindest eine erste Abdeckeinheit und die zumindest eine zweite Abdeckeinheit zumindest vorderseitig eine gemeinsame Ebene aus. Dadurch wird eine - abgesehen von den Übergangsbereichen zwischen den ersten und zweiten Abdeckeinheiten - durchgehende, ebene Fläche erreicht, die leicht zu reinigen ist.

In einem besonders bevorzugten Ausführungsbeispiel sind die ersten und/oder zweiten Abdeckeinheiten am Gehäusekorpus einhängbar ausgebildet. Hierzu weisen diese Abdeckeinheiten an der dem Gehäusekorpus zugewandten Rückseiten Einhängebeschläge auf, die mit am Gehäusekorpus vorgesehenen Einhängeelementen zusammenwirken. Dadurch wird erreicht, dass sich die Abdeckeinheiten insbesondere zu Reparatur und Wartungszwecken leicht entfernen lassen und dadurch ein Zugriff auf die im Gehäusekorpus vorhandene Videokonferenztechnik ohne erheblichen Montageaufwand möglich wird. In Abwandlung hiervon sind auch weitere aus dem Stand der Technik bekannte lösbare Befestigungsmechanismen denkbar, insbesondere Rast-, Klemm-, oder verdeckte Schraubverbindungen.

Insbesondere bei Aufnahme mehrerer Bildanzeigeeinrichtungen im Gehäusekorpus ist es vorteilhaft, dass die erste und/oder die zumindest zweite Abdeckeinheit aus mehreren einzelnen Abdeckeinheitselementen gebildet sind. Weiterhin vorteilhaft sind die ersten Abdeckeinheitselemente der ersten Abdeckeinheit in horizontaler Richtung nebeneinander, insbesondere in einer Reihe fluchtend nebeneinander angeordnet, wobei vorzugsweise hinter jedem ersten Abdeckeinheitselement eine Bildanzeigeeinrichtung vorgesehen ist. Die zweiten Abdeckeinheitselemente der zweiten Abdeckeinheit sind vorzugsweise jeweils in einer Reihe oberhalb und unterhalb der ersten Abdeckeinheit ebenfalls fluchtend nebeneinander angeordnet, und zwar derart, dass jeweils einem ersten Abdeckeinheitselement oberseitig bzw. unterseitig jeweils ein zweites Abdeckeinheitselement zugeordnet ist. Dadurch ergibt sich eine matrixartige Anordnung wobei die in einer Spalte angeordneten Abdeckeinheitselemente jeweils dieselbe Breite und die in einer Reihe angeordneten Abdeckeinheitselemente jeweils dieselbe Höhe aufweisen. Durch die geteilte Ausbildung der ersten und zweiten Abdeckeinheiten wird insbesondere bei Verwendung von mehreren Bildanzeigeeinrichtungen eine bessere Handhabbarkeit der Abdeckeinheiten ermöglicht.

Besonders bevorzugt weist die erste und zweite Abdeckeinheit gegenüber dem Gehäusekorpus einen Überstand auf. Dieser Überstand erstreckt sich vorzugsweise durchgehend umfangsseitig um den Gehäusekorpus. Der Überstand bewirkt, dass der Gehäusekorpus durch einen Videokonferenzteilnehmer bzw. Betrachter von vorne her nicht sichtbar ist, d.h. lediglich die ersten und zweiten Abdeckeinheiten sind für den Videokonferenzteilnehmer optisch wahrnehmbar.
Besonders bevorzugt steht die erste, in vertikaler Richtung mittig gegenüber dem Gehäusekorpus angeordnete Abdeckeinheit in horizontaler Richtung beidseitig gegenüber dem Gehäusekorpus vor. Die zweite Abdeckeinheit, die in einem oberen bzw. unteren Bereich des Gehäusekorpus oberhalb bzw. unterhalb der ersten Abdeckeinheit vorgesehen ist, steht in horizontaler und in vertikaler Richtung gegenüber dem Gehäusekorpus vor. Der horizontale Überstand ist hierbei gleich bemessen zu dem horizontalen Überstand der ersten Abdeckeinheit. In vertikaler Richtung ist abhängig von der Anordnung der zweiten Abdeckeinheit entweder ein oberseitiger oder ein unterseitiger Überstand vorgesehen.

In einem besonders bevorzugten Ausführungsbeispiel bilden die ersten und zweiten Abdeckeinheiten eine gemeinsame, eben ausgebildete Abdeckung für den Gehäusekorpus aus, wobei diese Abdeckung zumindest randseitig umlaufend eine konstante Abdeckungstiefe aufweist. Hierzu ist die erste Abdeckeinheit zumindest in den Randbereichen verstärkt ausgebildet und zwar derart, dass die erste Abdeckeinheit durch randseitig aufgebrachte Verstärkungselemente die gleiche Abdeckungstiefe aufweist wie die zweiten Abdeckeinheiten. Dadurch entsteht für den Betrachter der Eindruck einer durchgehenden gemeinsamen Abdeckung, an deren Vorderseite lediglich eine transparente Materialschicht aufgebracht ist. Ferner wird eine erleichterte Handhabbarkeit der ersten Abdeckeinheit erreicht.

In einem besonders bevorzugten Ausführungsbeispiel bildet der Gehäusekorpus einen Aufnahmeraum, der zur Aufnahme der Bildanzeigeeinrichtung der Bildaufnahmeeinrichtung, der Tonwiedergabeeinrichtung und gegebenenfalls weiterer Technikkomponenten, insbesondere zumindest einem Verstärker oder einer Zentraleinheit für die Videokonferenzsteuerung ausgebildet ist. Dieser Gehäusekorpus weist vorzugsweise eine Tiefe von maximal 300,00 mm, vorzugsweise 250,00 mm, insbesondere 200,00 mm auf. Durch die äußerst flache Ausbildung des Gehäusekorpus wird eine raumsparende Anordnung der Videokonferenzeinrichtung und damit eine Verwendung des Videokonfierenzmöbels auch in kleinen Räumen ermöglichst.

Besonders bevorzugt ist der Gehäusekorpus zur Montage an einer Wand ausgebildet. Diese Wand kann insbesondere eine raumbegrenzende Wand sein. Das Videokonferenzmöbel wird hierbei derart an der Wand befestigt, dass die den Gehäusekorpus vorderseitig vollständig verschließende Abdeckung lediglich einen geringfügigen Abstand, insbesondere einen Abstand von wenigen Zentimetern gegenüber dem Boden des Raums aufweist. Aufgrund des unterseitigen Überstands der Abdeckung gegenüber dem Gehäusekorpus kann optisch nahezu verdeckt eine Verkabelung des Videokonferenzmöbels erfolgen, beispielsweise eine Kabelverbindung mit einem Mikrofon oder eine Zuführung einer Energieversorgung, eines Netzwerkkabels o.ä..

In einem besonders bevorzugten Ausführungsbeispiel ist an der ersten Abdeckeinheit zumindest eine Tonwiedergabeeinrichtung angeordnet, insbesondere unmittelbar hinter der ersten Abdeckeinheit. Die Tonwiedergabeeinrichtung kann insbesondere ein Lautsprecher sein. Dieser Lautsprecher ist mit der ersten Abdeckeinheit derart verbunden, dass durch die erste Abdeckeinheit eine Übertragung der von der Tonwiedergabeeinrichtung erzeugten Schallwellen an den vor dem Videokonferenzmöbel befindlichen Raum erfolgt. Insbesondere ist eine direkte, unmittelbare mechanische Verbindung der Tonwiedergabeeinrichtung mit der ersten Abdeckeinheit vorgesehen. Dadurch wird die erste Abdeckeinheit selbst durch die Tonwiedergabeeinrichtung zum Schwingen angeregt. Somit erfolgt auch eine vollständige Überdeckung der Tonwiedergabeeinrichtung durch die erste Abdeckeinheit, sodass auch diese für den Konferenzteilnehmer optisch nicht erkennbar ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung soll nachfolgend anhand mehrerer Ausführungsbeispiele im Zusammenhang mit den Figuren näher erläutert werden. Zudem ergeben sich Weiterbildungen, Vorteile und Anwendungsmöglichkeiten der Erfindung auch aus der nachfolgenden Beschreibung der Ausführungsbeispiele und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Es wird aber ausdrücklich darauf hingewiesen, dass die Erfindung keinesfalls auf das angegebene Beispiel beschränkt sein soll. Die Figuren zeigen:
- Fig. 1: beispielhaft ein erstes Ausführungsbeispiel einer erfindungsgemäßen Videokonferenzvorrichtung in einer vorderseitigen Ansicht;
- Fig. 2: beispielhaft ein zweites Ausführungsbeispiel einer erfindungsgemäßen Videokonferenzvorrichtung in einer vorderseitigen Ansicht;
- Fig. 3: beispielhaft eine an einer Wand angeordnete, erfindungsgemäßen Videokonferenzvorrichtung in einer Seitenansicht;
- Fig. 4: beispielhafit eine erste Abdeckeinheit einer erfindungsgemäßen Videokonferenzvorrichtung in einer vorderseitigen Ansicht;
- Fig. 5: beispielhaft eine erste Abdeckeinheit einer erfindungsgemäßen Videokonferenzvorrichtung in einer rückseitigen Ansicht.

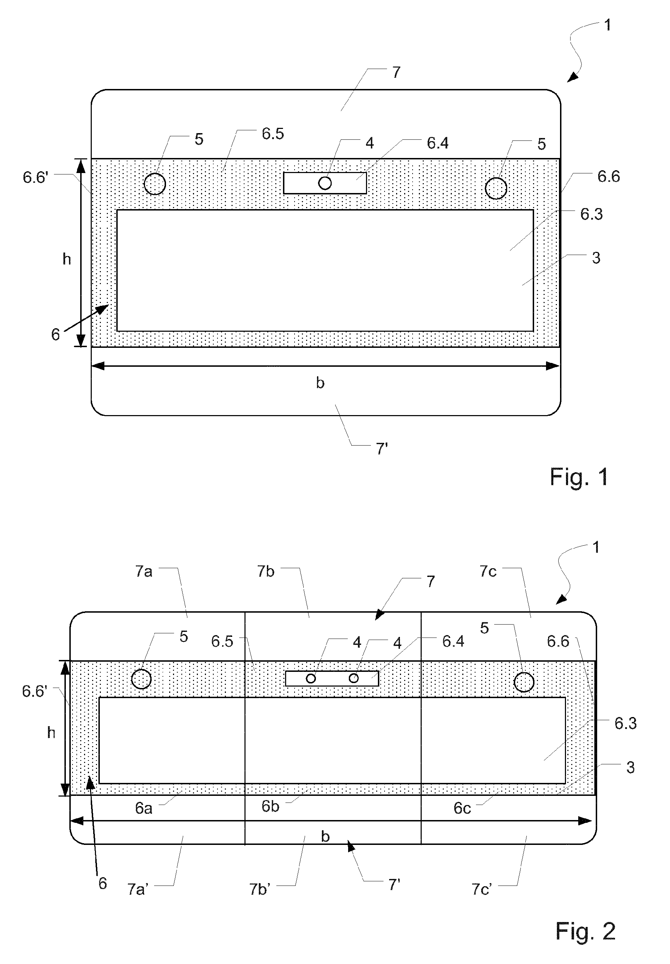

In den Figuren 1 und 2 ist mit dem Bezugszeichen 1 jeweils ein erfindungsgemäßes Videokonferenzmöbel bezeichnet. Das Videokonferenzmöbel 1 weist einen vorzugsweise aus Holz gebildeten Gehäusekorpus 2 auf, der einen Aufnahmeraum für zumindest eine Bildanzeigeeinrichtung 3, zumindest eine Bildaufnahmeeinrichtung 4 und eine Tonwiedergabeeinrichtung 5 bildet. Vorzugsweise ist das Gehäuse 2 kastenförmig ausgebildet und weist einen Bodenbereich sowie umfangsseitig von diesem Bodenbereich rechtwinklig abstehende Wandungsbereiche auf. Auf der dem Bodenbereich gegenüberliegenden Seite ist das Gehäuse 2 offen ausgebildet. An dieser offenen Vorderseite des Gehäuses 2 ist zumindest eine erste Abdeckeinheit 6 vorgesehen, die lösbar am Gehäusekorpus 2 befestigt ist. Mittels der ersten Abdeckeinheit 6 wird zumindest die Bildanzeigeeinrichtung 3 und die Bildaufnahmeeinrichtung 4 vollständig überdeckt, sodass diese den Videokonferenzteilnehmern zugewandten Technikkomponenten optisch durch die erste Abdeckeinheit 6 verdeckt werden. Um die von der Bildanzeigeeinrichtung 3 dargestellten Videosequenzen den an der Videokonferenz teilnehmenden Gesprächspartnern durch die erste Abdeckeinheit 6 hindurch darstellen zu können bzw. um der Bildaufnahmeeinrichtung 4eine Aufnahme von Videosequenzen durch die erste Abdeckeinheit 6 hindurch ermöglichen zu können, ist die erste Abdeckeinheit 6 zumindest abschnittsweise im Bereich der Bildanzeigeeinrichtung 3 und der Bildaufnahmeeinrichtung 4 transparent ausgebildet.
In einem bevorzugten Ausführungsbeispiel ist die erste Abdeckeinheit 6 zumindest an der dem Gehäusekorpus 2 abgewandten Vorderseite 6.1 vollflächig aus einem transparenten Material, insbesondere Glas gebildet. Die Abdeckeinheit 6 weist vorderseitig, d.h. an der den Videokonferenzteilnehmern zugewandten Vorderseite eine Entspiegelungsschicht auf, mittels der Reflektionen und Spiegelungen zumindest weitestgehend unterdrückt werden.

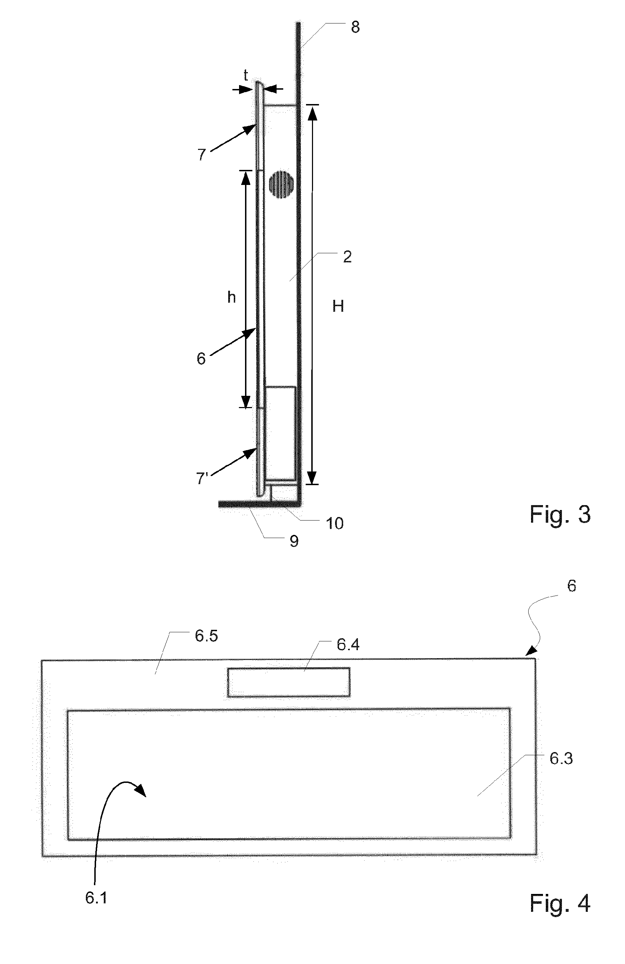

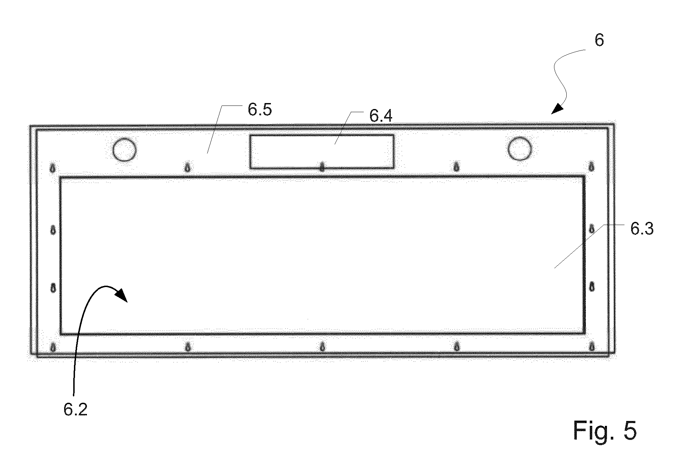

In den Figuren 4 und 5 ist jeweils eine erste Abdeckeinheit 6 gezeigt, wobei Figur 4 eine vorderseitige Ansicht und Figur 5 eine rückseitige Ansicht zeigt. Die erste Abdeckeinheit 6 ist vorderseitig einstückig aus einem transparenten Material, insbesondere Glas oder einem transparenten Kunststoff gebildet. Rückseitig ist auf diese transparente Materialschicht eine intransparente Materialdeckschicht aufgebracht, und zwar lediglich bereichsweise in den Randbereichen der ersten Abdeckeinheit 6, wobei ein Bildanzeigebereich 6.3 und ein Bildaufnahmebereich 6.4 aus dieser intransparenten Materialdeckschicht ausgespart ist. Diese intransparente Materialdeckschicht bewirkt, dass durch die transparente vorderseitige Materialschicht der ersten Abdeckeinheit 6 hindurch lediglich in den Bereichen Licht durchtreten kann, die notwendigerweise zum Betrieb der Videokonferenzvorrichtung 1 lichtdurchlässig sein müssen, damit die Videokonferenzteilnehmer die Bildanzeigeeinrichtung 3 durch die erste Abdeckeinheit 6 hindurch wahrnehmen können bzw. die Bildaufnahmeeinrichtung 4 durch die erste Abdeckeinheit 6 hindurch in Sichtkontakt mit dem vor der Videokonferenzvorrichtung 1 befindlichen Halbraum steht.

Insbesondere wird die intransparente Materialdeckschicht durch eine Lackschicht gebildet, die auf der transparenten Materialschicht der ersten Abdeckeinheit 6 auf der dem Gehäusekorpus 2 zugewandten Rückseite aufgebracht ist. Durch die intransparente Materialdeckschicht wird ein intransparenter Bereich 6.5 der ersten Abdeckeinheit 6 erzeugt, mittels dem verhindert wird, dass für einen vor der Videokonferenzvorrichtung 1 befindlichen Betrachter Bereiche im Gehäusekorpus 2 sichtbar werden, die einen störenden optischen Einfluss auf den Betrachter haben und diesen bei dem geführten Gespräch ablenken. Zudem kann durch den intransparenten Bereich 6.5 erreicht werden, dass eine ungewünschte Ablenkung der Konferenzteilnehmer durch Licht vermieden wird, das im Gehäusekorpus 2 durch die Technikkomponenten entsteht oder von außen in den Gehäusekorpus 2 beispielsweise durch Lüftungsschlitze hindurch einfällt. Durch die unmittelbare Anordnung der Bildanzeigeeinrichtung 3 hinter dem transparent ausgebildeten Bildanzeigebereich 6.3 und der Bildaufnahmeeinrichtung 4 hinter dem transparent ausgebildeten Bildaufnahmebereich 6.4 kann auch durch diese transparenten Bereiche der ersten Abdeckeinheit 6 hindurch kein Störlicht vom Gehäusekorpus 2 nach außen treten.

Die erste Abdeckeinheit 6 weist eine Höhe h auf, die kleiner ist als die Höhe H des dahinter befindlichen Gehäusekorpus 2 (Fig. 3). Um eine vorderseitige Überdeckung der nicht von der ersten Abdeckeinheit 6 überdeckten Bereiche des Gehäusekorpus 2 zu erreichen ist im gezeigten Ausführungsbeispiel ober- bzw. unterseitig an die erste Abdeckeinheit 6 anschließend jeweils eine zweite Abdeckeinheit 7, 7' vorgesehen, die aus einem nicht transparenten Material gebildet ist. Bevorzugt ist die zweite Abdeckeinheit 7, 7' aus einem acrylgebundenem Mineralwerkstoff, insbesondere dem Material Corian^{®} hergestellt. Die zweiten Abdeckeinheiten 7, 7' sind hierbei ebenfalls lösbar gegenüber dem Gehäusekorpus 2 befestigt und zwar derart, dass die zweiten Abdeckeinheiten 7, 7' oberseitig bzw. unterseitig unmittelbar an die erste Abdeckeinheit 6 anschließen. Vorderseitig bildet die erste Abdeckeinheit 6 und die zweiten Abdeckeinheiten 7, 7' eine gemeinsame Ebene aus, d.h. die erste Abdeckeinheit 6 und die zweiten Abdeckeinheiten 7, 7' verlaufen bündig, sodass die Videokonferenzvorrichtung 1 vorderseitig durch eine ebene Fläche abgeschlossen wird.

Die lösbare Verbindung der ersten und zweiten Abdeckeinheiten 6, 7, 7' am Gehäusekorpus 2 kann mittels jeglicher aus dem Stand der Technik bekannten Verbindungsmitteln, insbesondere Schraubverbindungen, Klemmverbindungen, Klippverbindungen oder Einhängeverbindungen erfolgen. Besonders bevorzugt ist an den ersten und zweiten Abdeckeinheiten 6, 7, 7' zumindest ein Eingängebeschlag vorgesehen, der mit am Gehäusekorpus 2 vorgesehenen Einhängeverbindungselementen derart zusammenwirkt, dass die jeweiligen Abdeckeinheiten 6, 7, 7' hängend an dem Gehäusekorpus 2 befestigt sind.

Die erfindungsgemäße Videokonferenzvorrichtung 1 kann eine Bildanzeigeeinrichtung 3 oder auch mehrere in Reihe nebeneinander angeordnete Bildanzeigeeinrichtungen 3 aufweisen. Diese Bildanzeigeeinrichtungen 3 können insbesondere durch Bildschirme mit einer Diagonale von 60 bzw. 70 Zoll gebildet werden. Bei derart groß dimensionierten Bildanzeigeeinrichtungen 3 ist es bei Anordnung mehrerer Bildschirme nötig, die erste Abdeckeinheit 6 bzw. die zweiten Abdeckeinheiten 7, 7' geteilt auszubilden, d.h. die Abdeckeinheiten 6, 7, 7' werden aus mehreren einzelnen Abdeckeinheitselementen 6a, 6b, 6c, 7a, 7b, 7c, 7a', 7b', 7c' gebildet (Fig. 2). Hierzu sind bevorzugt mehrere erste Abdeckeinheitselemente 6a, 6b, 6c der ersten Abdeckeinheit 6 in Reihe nebeneinander angeordnet, sodass deren ober- bzw. unterseitige Kanten in einer Linie fluchtend zu liegen kommen und eine rechteckförmige erste Abdeckeinheit 6 bilden. Die zweiten Abdeckeinheitselemente der zweiten Abdeckeinheit 7, 7' sind jeweils oberhalb bzw. unterhalb der ersten Abdeckeinheitselemente 6a, 6b, 6c angeordnet und zwar paarweise derart, dass jeweils einem ersten Abdeckeinheitselement oberseitig bzw. unterseitig jeweils ein zweites Abdeckeinheitselement 7a, 7b, 7c, 7a', 7b', 7c' zugeordnet ist.

Besonders bevorzugt weist die erste und zweite Abdeckeinheit 6, 7, 7' gegenüber dem Gehäusekorpus 2 einen Überstand auf, d.h. der Gehäusekorpus 2 ist gegenüber den Außenkanten der ersten bzw. zweiten Abdeckeinheit 6, 7, 7' zurückgesetzt (Fig.3). Dadurch wird erreicht, dass der Gehäusekorpus bei vorderseitiger Betrachtung der Videokonferenzvorrichtung 1 verdeckt wird und damit lediglich die durch die erste und zweite Abdeckeinheit 6, 7, 7' gebildete Abdeckung für den vor dem Videokonferenzmöbel 1 befindlichen Betrachter sichtbar ist. Insbesondere weist die erste Abdeckeinheit 6 seitliche Überstände gegenüber dem Gehäusekorpus 2 auf, d.h. die Abdeckeinheit 6 weist eine Breite b auf, die größer ist als die Breite des Gehäusekorpus 2. Die zweiten Abdeckeinheiten 7, 7' weisen ebenfalls eine Breite b auf, die größer ist als die Breite des Gehäusekorpus 2. Bevorzugt ist die Breite b der zweiten Abdeckeinheiten 7, 7' identisch zu der Breite b der ersten Abdeckeinheit 6. Ferner sind die zweiten Abdeckeinheiten 7, 7' gegenüber dem Gehäusekorpus 2 derart angeordnet, dass diese oberseitig bzw. unterseitig ebenfalls einen Überstand gegenüber dem Gehäusekorpus 2 aufweisen. Dadurch stehen die durch die erste und zweite Abdeckeinheit 6, 7, 7' gebildete Abdeckung gegenüber dem Gehäusekorpus 2 sowohl in horizontaler als auch in vertikaler Richtung umfangseitig umlaufend gegenüber dem Gehäusekorpus 2 vor.

Besonders bevorzugt weist die durch die erste Abdeckeinheit 6 bzw. die zweiten Abdeckeinheiten 7, 7' gebildete Abdeckung des Gehäusekorpus 2 zumindest randseitig umlaufend eine konstante Abdeckungstiefe t auf. Da die transparente Materialschicht der ersten Abdeckeinheit 6 zusammen mit der intransparenten Materialdeckschicht eine geringere Tiefe aufweist als die zweiten Abdeckeinheiten 7, 7', sind im rückwärtigen Bereich der ersten Abdeckeinheit 6 in den äußeren Randbereichen 6.6, 6.6', Vorsatzelemente vorgesehen, die eine Materialtiefe derart aufweisen, dass die Tiefe der ersten Abdeckeinheit 6 gleich der Tiefe der zweiten Abdeckeinheiten 7, 7' ist. Dadurch wird randseitig eine umlaufend konstante Abdeckungstiefe t erreicht.

In einem besonders bevorzugten Ausführungsbeispiel ist, wie in Figur 3 gezeigt, der Gehäusekorpus 2 zur Befestigung an einer Wand 8, insbesondere einer raumteilenden Wand 8 vorgesehen. Der Gehäusekorpus 2 wird dabei mit seinem Bodenbereich gegenüber der Wand 8 befestigt, und zwar derart, dass das Videokonferenzmöbel 1 nur geringfügig, d.h. in einem Bereich zwischen 2cm und 10cm vom Boden 9 beabstandet ist. Insbesondere kann am Gehäusekorpus 2 ein Sockelabschnitt 10 vorgesehen sein, der den Raum zwischen dem Boden 9 und der Wandung des Gehäusekorpus 2 begrenzt. Vorzugsweise ist der Sockelabschnitt 10 gegenüber der ersten Abdeckeinheit rückgesetzt angeordnet. Innerhalb des zwischen dem Sockelabschnitt 10 und der Wand 8 befindlichen Raums kann eine bodenseitige Verkabelung des Videokonferenzmöbels 1, beispielsweise mit einem am Konferenztisch aufgestellten Mikrofon erfolgen. Alternativ hierzu kann das Mikrofon auch in das Videokonferenzmöbel 1 integriert sein.

Besonders bevorzugt ist unmittelbar an der Rückseite 6.2 der ersten Abdeckeinheit 6 zumindest eine Tonwiedergabeeinrichtung 5 vorgesehen, wobei die Schallabstrahlrichtung der Tonwiedergabeeinrichtung 5 in Richtung der ersten Abdeckeinheit 6 erfolgt. Damit werden die von der Tonwiedergabeeinrichtung 5 erzeugten Schallwellen unmittelbar an die erste Abdeckeinheit 6 abgegeben, sodass diese von diesen Schallwellen angeregt wird und dabei zur Übertragung der von der Tonwiedergabeeinrichtung 5 erzeugten Schallwellen dient. Insbesondere kann die Tonwiedergabeeinrichtung 5 durch Lautsprecher gebildet werden, wobei diese bevorzugt paarweise vorgesehen sind und zwar in einem Bereich oberhalb der Bildanzeigeeinrichtung 3 in jeweils neben der Bildaufnahmeeinrichtung 4.

Die Erfindung wurde voranstehend an Ausführungsbeispielen beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Videokonferenzmöbel
- 2: Gehäusekorpus
- 3: Bildanzeigeeinrichtung
- 4: Bildaufnahmeeinrichtung
- 5: Tonwiedergabeeinrichtung
- 6: erste Abdeckeinheit
- 6a, 6b, 6c: erstes Abdeckeinheitselement
- 6.1: Vorderseite
- 6.2: Rückseite
- 6.3: Bildanzeigebereich
- 6.4: Bildaufnahmebereich
- 6.5: intransparenter Bereich
- 6.6, 6.6': äußere Randbereiche
- 7, 7': zweite Abdeckeinheit
- 7a, 7b, 7c: zweites Abdeckeinheitselement
- 7a', 7b', 7c': zweites Abdeckeinheitselement
- 8: Wand
- 9: Boden
- 10: Sockelabschnitt

- b: Breite
- h: Höhe
- H: Höhe
- t: Abdeckungstiefe

## Patentansprüche

1. Videokonferenzmöbel umfassend einen Gehäusekorpus (2), in dem zumindest eine Bildanzeigeeinrichtung (3), zumindest eine Bildaufnahmeeinrichtung (4) und zumindest eine Tonwiedergabeeinrichtung (5) vorgesehen ist, **dadurch gekennzeichnet, dass** zumindest die Bildanzeigeeinrichtung (3) und die Bildaufnahmeeinrichtung (4) im Gehäusekorpus (2) aufgenommen sind und dass wenigstens eine zur lösbaren Befestigung am Gehäusekorpus (2) ausgebildete erste Abdeckeinheit (6) vorgesehen ist, die die Bildanzeigeeinrichtung (3) und die Bildaufnahmeeinrichtung (4) vollständig überdeckt und zumindest abschnittsweise im Bereich der Bildanzeigeeinrichtung (3) und der Bildaufnahmeeinrichtung (4) transparent ausgebildet ist.

2. Vorrichtung nach Anspruch 1, **dadurch gekennzeichnet, dass** die Bildanzeigeeinrichtung (3), die Bildaufnahmeeinrichtung (4) und die Tonwiedergabeeinrichtung (5) vollständig in dem durch den Gehäusekorpus (2) und die erste Abdeckeinheit (6) begrenzten Raum aufgenommen sind.

3. Vorrichtung nach Anspruch 1 oder 2, **dadurch gekennzeichnet, dass** die erste Abdeckeinheit (6) zumindest an der dem Gehäusekorpus (2) abgewandten Vorderseite (6.1) vollflächig aus einer transparenten Materialschicht, insbesondere aus Glas gebildet ist und zumindest einen transparenten Bildanzeigebereich (6.3) und einen transparenten Bildaufnahmebereich (6.4) aufweist und/oder dass die erste Abdeckeinheit (6) eine dem Gehäusekorpus (2) abgewandte vorderseitige Entspiegelung aufweist.

4. Vorrichtung nach Anspruch 3, **dadurch gekennzeichnet, dass** die zumindest eine Bildanzeigeeinrichtung (3) unmittelbar hinter dem Bildanzeigebereich (6.3) und die Bildaufnahmeeinrichtung (4) unmittelbar hinter dem Bildaufnahmebereich (6.4) angeordnet ist.

5. Vorrichtung nach einem der vorhergehenden Ansprüche, **dadurch gekennzeichnet, dass** die erste Abdeckeinheit (6) zumindest einen intransparenten oder im Wesentlichen intransparenten Bereich (6.5) aufweist.

6. Vorrichtung nach Anspruch 5, **dadurch gekennzeichnet, dass** der intransparente oder im Wesentlichen intransparente Bereich (6.5) randseitig vorgesehen ist und/oder rahmenfiörmig ausgebildet ist.

7. Vorrichtung nach Anspruch 5 oder 6, **dadurch gekennzeichnet, dass** der intransparente oder im Wesentlichen intransparente Bereich (6.5) durch eine intransparente Materialdeckschicht, insbesondere eine Lackschicht gebildet wird, die auf die transparente Materialschicht der ersten Abdeckeinheit (6) auf der dem Gehäusekorpus (2) zugewandten Rückseite aufgebracht ist.

8. Vorrichtung nach einem der vorhergehenden Ansprüche, **dadurch gekennzeichnet, dass** zumindest eine zweite Abdeckeinheit (7, 7') aus einem nichttransparenten Material vorgesehen ist und/oder dass die zweite Abdeckeinheit (7, 7') aus einem acrylgebundenen Mineralwerkstoff hergestellt ist.

9. Vorrichtung nach Anspruch 8, **dadurch gekennzeichnet, dass** zumindest ein Paar von zweiten Abdeckeinheiten (7, 7') vorgesehen ist, wobei jeweils eine zweite Abdeckeinheit (7, 7') oberhalb und unterhalb der ersten Abdeckeinheit (6) vorgesehen ist.

10. Vorrichtung nach einem der Ansprüche 9 bis 11, **dadurch gekennzeichnet, dass** die zumindest eine erste Abdeckeinheit (6) und die zumindest eine zweite Abdeckeinheit (7) zumindest vorderseitig eine gemeinsame Ebene ausbilden.

11. Vorrichtung nach einem der Ansprüche 8 bis 10, **dadurch gekennzeichnet, dass** die zumindest eine erste und/oder die zumindest eine zweite Abdeckeinheit (6, 7, 7') am Gehäusekorpus (2) einhängbar ausgebildet sind.

12. Vorrichtung nach einem der Ansprüche 8 bis 11, **dadurch gekennzeichnet, dass** die zumindest eine erste und/oder die zumindest eine zweite Abdeckeinheit (6, 7, 7') aus mehreren, einzelnen Abdeckeinheitselementen (6a, 6b, 6c, 7a, 7b, 7c, 7a', 7b', 7c') gebildet sind und/oder dass die ersten Abdeckeinheitselemente (6a, 6b, 6c) der ersten Abdeckeinheit (6) in horizontaler Richtung nebeneinander, insbesondere in einer Reihe fluchtend nebeneinander angeordnet sind und/oder dass die zweiten Abdeckeinheitselemente (7a, 7b, 7c, 7a', 7b', 7c') der zweiten Abdeckeinheit (7, 7') in jeweils einer Reihe oberhalb und unterhalb der ersten Abdeckeinheit fluchtend nebeneinander angeordnet sind.

13. Vorrichtung nach einem der vorhergehenden Ansprüche, **dadurch gekennzeichnet, dass** die am Gehäusekorpus (2) angeordneten Abdeckeinheiten (6, 7, 7') eine gemeinsame Abdeckung für den Gehäusekorpus (2) ausbilden, die zumindest randseitig umlaufend eine konstante Abdeckungstiefe (t) aufweist.

14. Vorrichtung nach einem der vorhergehenden Ansprüche, **dadurch gekennzeichnet, dass** der Gehäusekorpus (2) zur Aufnahme mehrerer Bildanzeigeeinrichtungen (3) ausgebildet ist.

15. Vorrichtung nach einem der vorhergehenden Ansprüche, **dadurch gekennzeichnet, dass** der Gehäusekorpus (2) zur Montage an einer Wand (8) ausgebildet ist und/oder dass die Tonwiedergabeeinrichtung (5) unmittelbar an der Rückseite (6.2) der ersten Abdeckeinheit (6) vorgesehen ist und die erste Abdeckeinheit (6) zur Übertragung der von der Tonwidergabeeinrichtung (5) erzeugten Schallwellen dient.
